# EUROPÄISCHE PATENTANMELDUNG

(11) **EP 1 462 006 A1**
(43) Veröffentlichungstag der Anmeldung: **29.09.2004**
(21) Anmeldenummer: 03090400.7
(22) Anmeldetag: 24.11.2003
(51) Int. Cl.: A22C 17/00

(54) **Gyros und Doener Aufbau, Transport und Lagerungsgeraet**

(30) Priorität: 29.03.2003 EP 03007200
(71) Anmelder: Raptis Ilias, 10709 Berlin (DE)
(72) Erfinder: Raptis Ilias, 10709 Berlin (DE)

(57) **Zusammenfassung**

Das Gyros- und Döner-Aufbau-, Transport- und Lagerungsgerät besteht aus einer Aufbauvorrichtung mit einem Fundamentring **1** und auf einem Bolzen **11** aufgesteckten neun Etagenringen **4** sowie einer Vorrichtung aus zwei Halbrohren **12a** und **12b** mit Halteplättchen **15** und angeschweißten Deckplatten **18a** und **18b** für Lagerung oder Transport eines angefertigten Fleischspießes.

Zunächst wird ein Fleischspieß mit der Aufbauvorrichtung angefertigt. Anschließend wird die Vorrichtung für Lagerung oder Transport des Spießes angebacht und somit kann der Fleischspieß bis zum Zeitpunkt der Nutzung gelagert oder an seinen Nutzungsort transportiert werden.

## Beschreibung

Die Erfindung betrifft ein Gyros- und Döner-Aufbau-, Transport- und Lagerungsgerät.

Das Aufbauen von Gyros- und Dönerspießen ist für alle Gastronomen eine mühevolle und langwierige Arbeit. Die Herstellung erfolgt bislang in Handarbeit, indem man eine bestimmte Menge Hackfleisch oder Scheibenfleisch manuell vorformt und auf den Spieß steckt. Dieses Stück muss anschließend auf dem Spieß noch mal zurechtgeformt und angedrückt werden, damit es seine endgültige Form und Festigkeit erhält.

Der letzte Stand der Technik ist die Erfindung DE 195 13 636 C 1, die eine Vorrichtung zur Herstellung von aus Hack- und Scheibenfleischschichten bestehendem Döner darstellt. Dabei werden zwei Dönerspieße anhand einer Auflegeeinrichtung für das Schichten von Scheibenfleisch und eine Auftragseinrichtung zum Auftragen von Hackfleischschichten abwechselnd von der Auflege- zur Auftragseinrichtung manuell hin- und herbewegt.
Die Vorteile unserer Erfindung bestehen darin, dass unsere Vorrichtung zeit- und platzsparender, aber auch einfacher zu handhaben ist. Außerdem ist die
Vorrichtung durch ihre einfache Konstruktion kostengünstiger zu produzieren und kaum verschleißanfällig, was eine langjährige Garantie sichert. Zudem weist unsere Erfindung im Hinblick auf die Hygienevorschriften deutliche Vorteile auf, da die Vorrichtung einfach und schnell in alle Einzelteile zerlegbar ist und daher leichter und gründlicher gereinigt werden kann.
Ein weiterer Vorteil besteht darin, dass mit unserer Erfindung durch eine angepasste zusätzliche Vorrichtung ein anschließender Transport oder eine Lagerung von angefertigten Gyros- und Dönerspießen möglich ist.

Der Erfindung liegt die Aufgabe zugrunde, mit Hilfe einer einfachen Vorrichtung auf schnelle und standardisierte Art und Weise einen aus Hack- und / oder Scheibenfleisch bestehenden Gyros bzw. Döner aufzubauen, wodurch die Arbeitszeit um ein Vielfaches reduziert wird und somit die Produktivität gesteigert werden kann.
Dieses Problem wird erfindungsgemäß mit den Merkmalen des Anspruchs 1 durch eine Gyros- Döneraufbauvorrichtung gelöst, die anhand mehrerer gleichmäßig formender Etagenringe einen erleichterten und effektiveren Aufbau eines Fleischspießes ermöglicht. Dabei können die einzelnen Etagenringe nacheinander mit Hack- und Scheibenfleisch soweit gefüllt werden, bis die erwünschte Höhe des Fleischspießes erreicht ist. Das seitliche Wegfließen der Hackfleischschichten wird durch die formgebenden Etagenringe vermieden und eine erhöhte Festigkeit des Fleischspießes durch manuelle Andruckkraft auf die einzelnen gefüllten Etagen gewährleistet.

Um mit unserer Aufbauvorrichtung einen Fleischspieß zu erstellen, geht der Gastronom im einzelnen wie folgt vor:
Er hat zunächst die Aufbauvorrichtung mit einem leeren Fleischspieß und dessen Bodenplatte in der Mitte vor sich stehen. Er schließt den ersten Etagenring 4 und füllt diesen mit dem zubereitungsfertigen Hackfleisch bis zum oberen Rand. Darauf wird anschließend eine dünne Schicht Scheibenfleisch zur besseren Stabilisierung des Fleischspießes gelegt. Dann wird der nächste Etagenring **4** geschlossen und wieder mit Hackfleisch gefüllt, sowie mit Scheibenfleisch belegt. Dieser Vorgang wiederholt sich mit den nachfolgenden Etagenringen 4 bis die gewünschte Höhe des Fleischspießes erreicht ist. Zum Schluss werden von oben nach unten alle Etagenringe 4 wieder geöffnet und der Fleischspieß ist fertig.

Da in vielen Gastronomiegewerben eine Lagerung oder ein Transport von mehreren angefertigten Gyros- und Dönerspießen erforderlich ist, wird dieses Problem erfindungsgemäß mit den Merkmalen des Anspruchs 12 durch eine angepasste Gyros- und Dönertransport und Lagerungsvorrichtung unseres Gerätes gelöst.
Durch Verschluss der beiden Halbrohre dieser Vorrichtung bleiben Form und Festigkeit der Fleischspieße erhalten und eine Lagerung oder Transport wird somit ermöglicht. Die Vorrichtung ist kaum verschleißanfällig, leicht in seine Einzelteile zerlegbar, und daher auch einfach und gründlich zu reinigen.

Zum Transport oder Lagerung des fertigen Fleischspießes werden die beiden Halbrohre **12a** und **12b** um den Fleischspieß aufgestellt und verschlossen. Die Stabilität des Fleischspießes wird dadurch gewährleistet, dass beim Verschließen die Halteplättchen **14** zwischen Bodenplatte des Fleischspießes und der untersten Fleischschicht gesteckt werden, die gebogenen Halteplättchen **15** unter der Bodenplatte des Fleischspießes festigen und die angeschweißten Deckplatten **18a** und **18b** den Spieß zusätzlich fest umschließen.

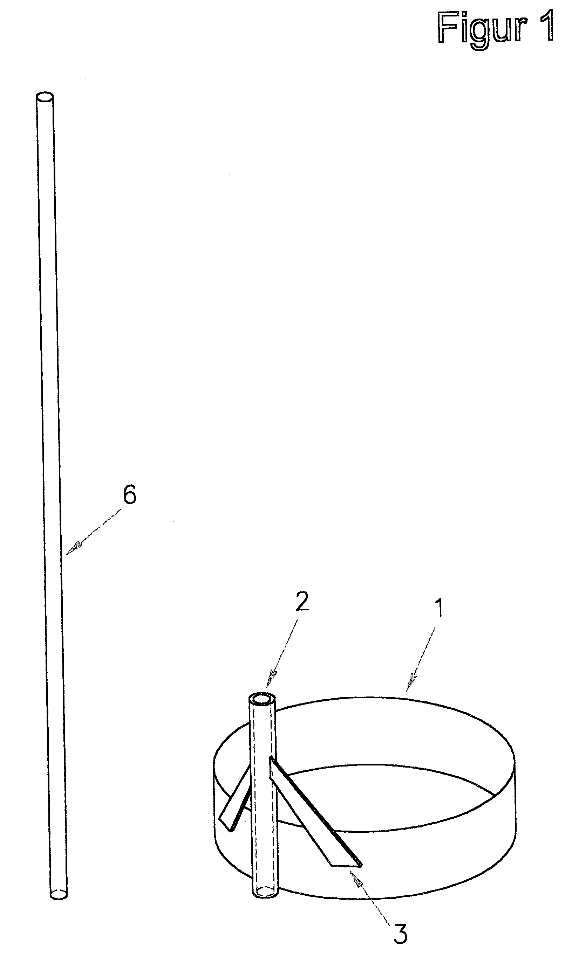

**Figur 1** ist eine perspektivische Seiten-/Rückansicht des Fundamentrings **1** mit einem angeschweißten Rohr **2,** welches durch zwei angeschweißte Stützen **3** befestigt ist. Weiterhin ist ein Bolzen **6** abgebildet, der in das angeschweißte Rohr **2** aufgesteckt wird.

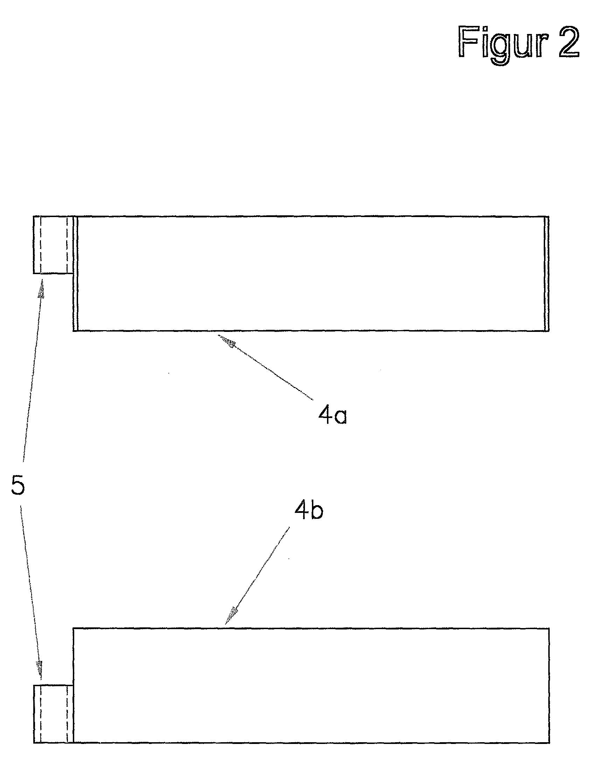

**Figur 2** ist eine Seitenansicht des rechten **4a** und linken **4b** Halbringes mit den jeweils angeschweißten Rohrringen **5** zeigt, welche auf den Bolzen **6** gesteckt werden.

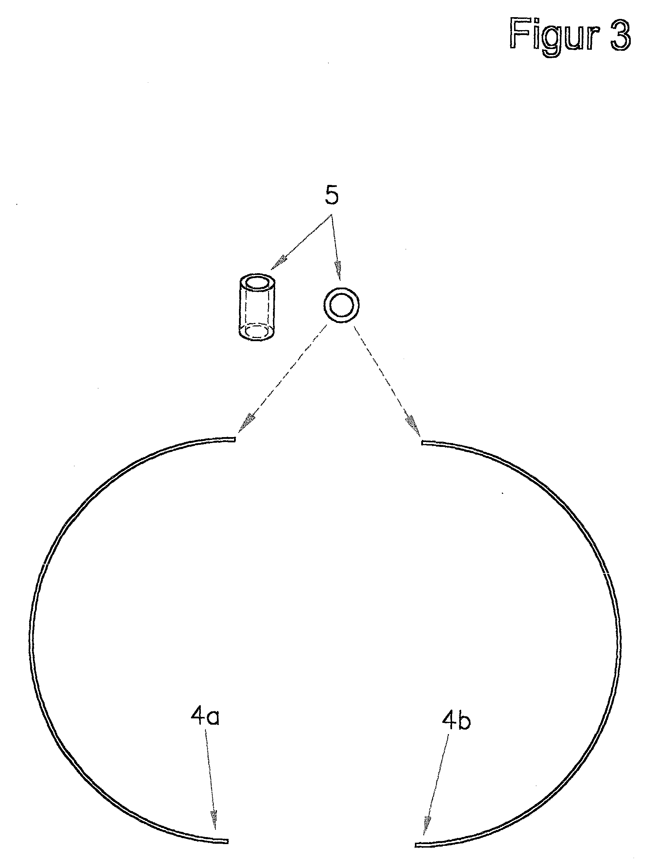

**Figur 3** zeigt eine Draufsicht der beiden Halbringe **4a** und **4b,** sowie eine Drauf- und Seitenansicht der angeschweißten Rohringe **5.**

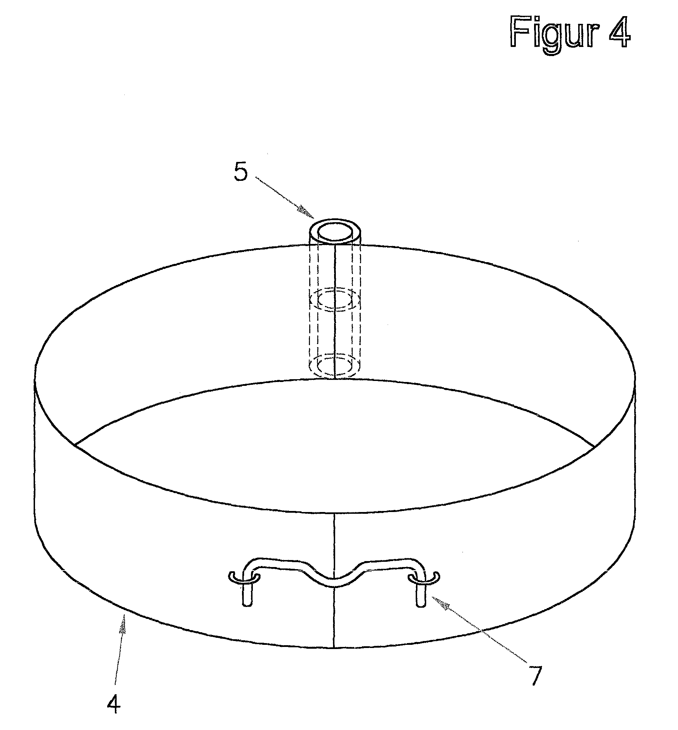

**Figur 4** zeigt eine perspektivische Vorderansicht der mit ihren angeschweißten Rohrringen **5** versehenen Halbringe **4a** und **4b,** die durch einen Verschluss 7 zu einem Etagenring 4 zusammengefügt sind.

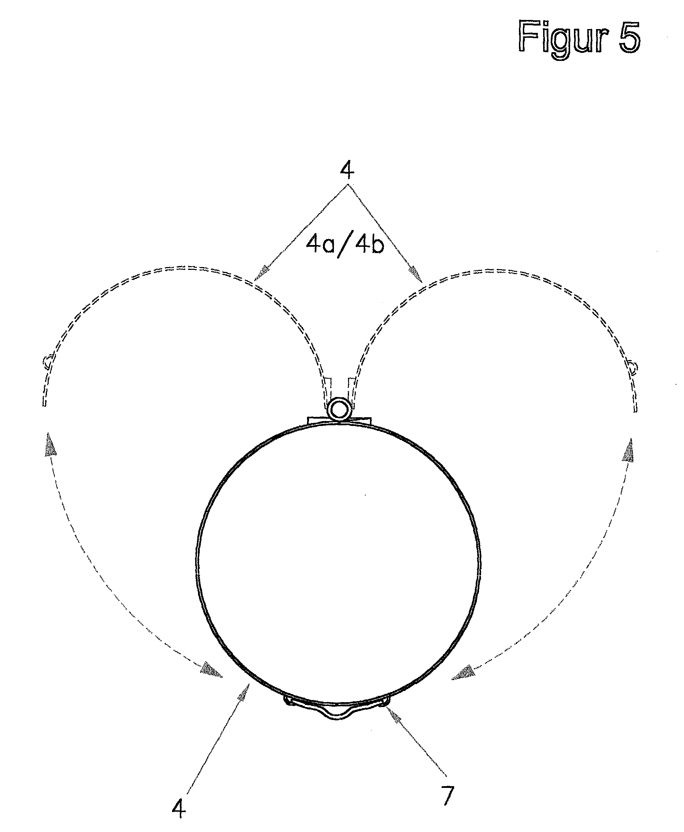

**Figur 5** zeigt eine schematische Draufsicht der Öffnungsbewegung der Halbringe **4a** und **4b,** sowie einen durch einen Verschluss **7** geschlossenen Etagenring **4.**

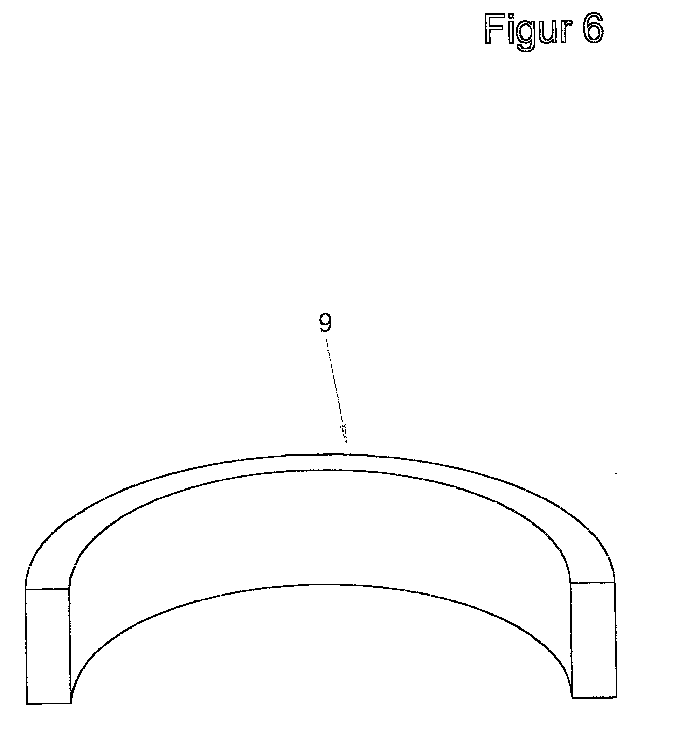

**Figur 6** zeigt eine perspektivische Innensicht eines aus hartem Kunststoff bestehenden Reduzierstückes **9.**

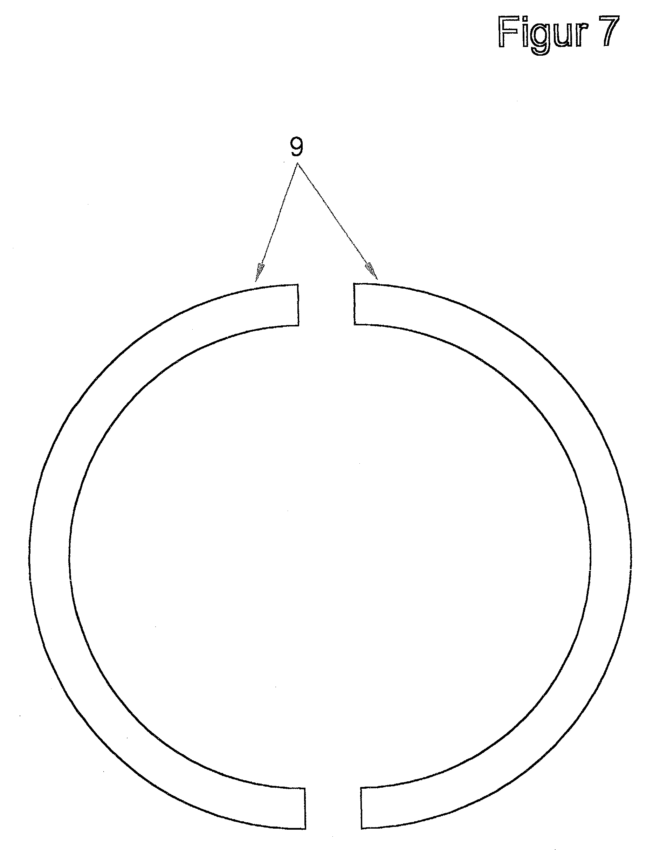

**Figur 7** zeigt eine Draufsicht zweier zu einem Kreis zusammengelegter Reduzierstücke **9.**

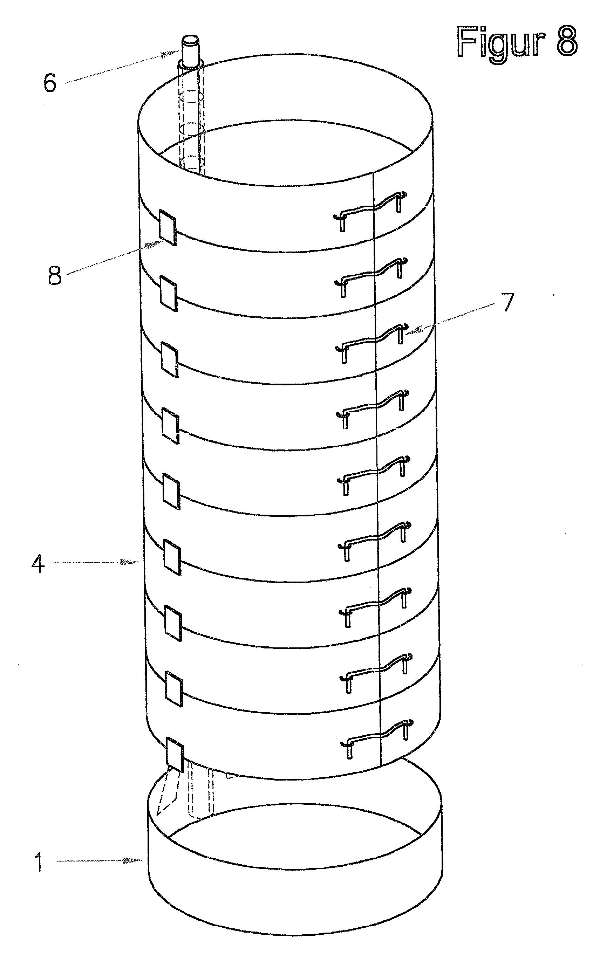

**Figur 8** ist eine perspektivische Vorder-/Seitenansicht der kompletten Aufbauvorrichtung im verschlossenen Zustand mit dem Fundamentring **1,** den Etagenringen **4,** dem Bolzen **6,** den Verschlüssen **7** und den Plättchen **8**.

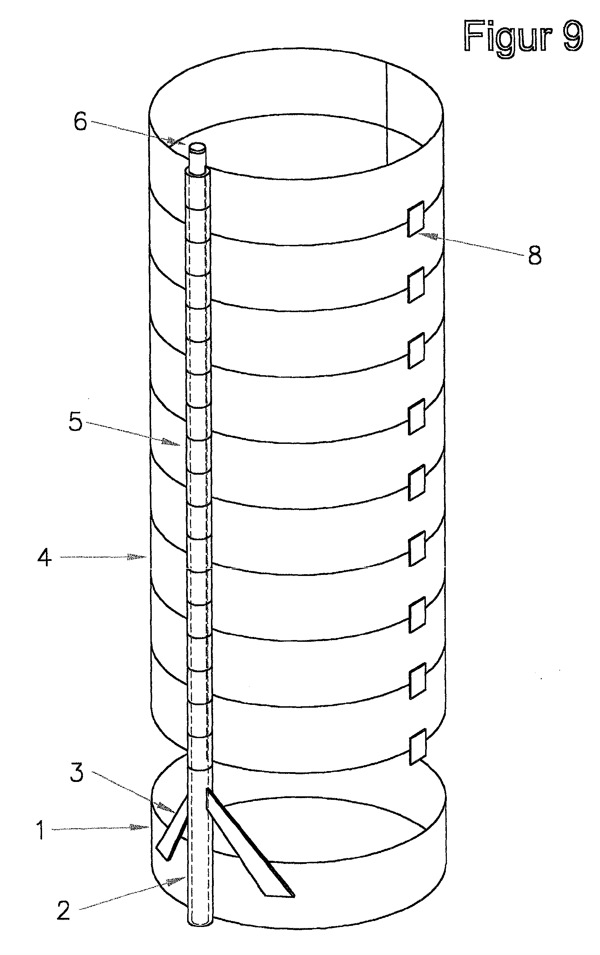

**Figur 9** zeigt eine perspektivische Seiten-/Rückansicht der kompletten Aufbauvorrichtung im verschlossenen Zustand mit dem Fundamentring **1,** dem angeschweißten Rohr **2,** den angeschweißten Stützen **3**, den Etagenringen **4**, den angeschweißten Rohrringen **5**, dem Bolzen **6** und den Plättchen **8.**

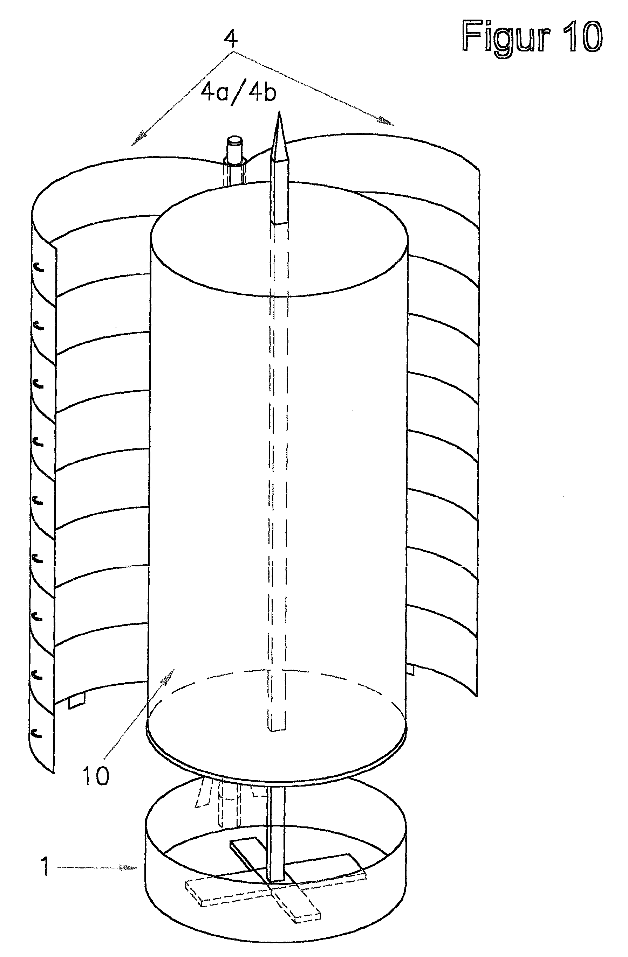

**Figur 10** ist eine perspektivische Vorder-/Seitenansicht der kompletten Aufbauvorrichtung im geöffneten Zustand mit dem Fundamentring **1,** den Halbringen **4a** und **4b,** sowie dem angefertigten Gyros-/Dönerspieß **10.**

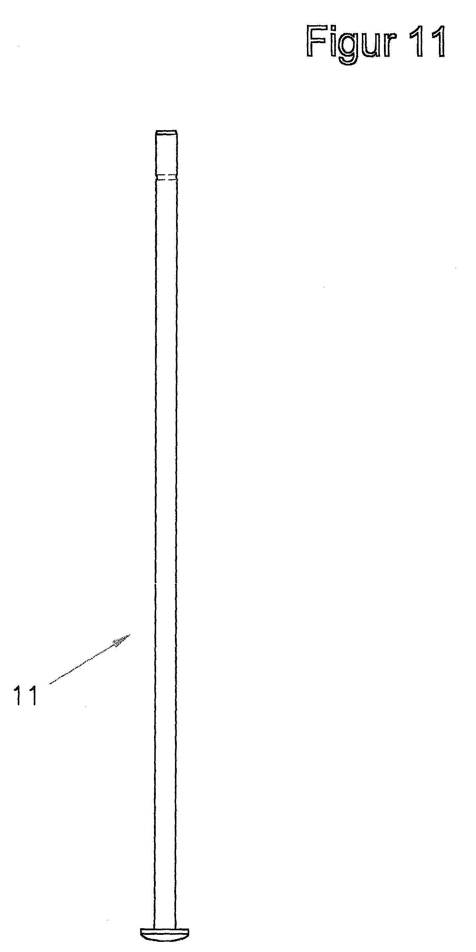

**Figur 11** ist eine Abbildung des Bolzens **11,** an dem die beiden Halbrohre **12a** und **12b** durch die angeschweißten Röhrchen **13** aufgesteckt werden.

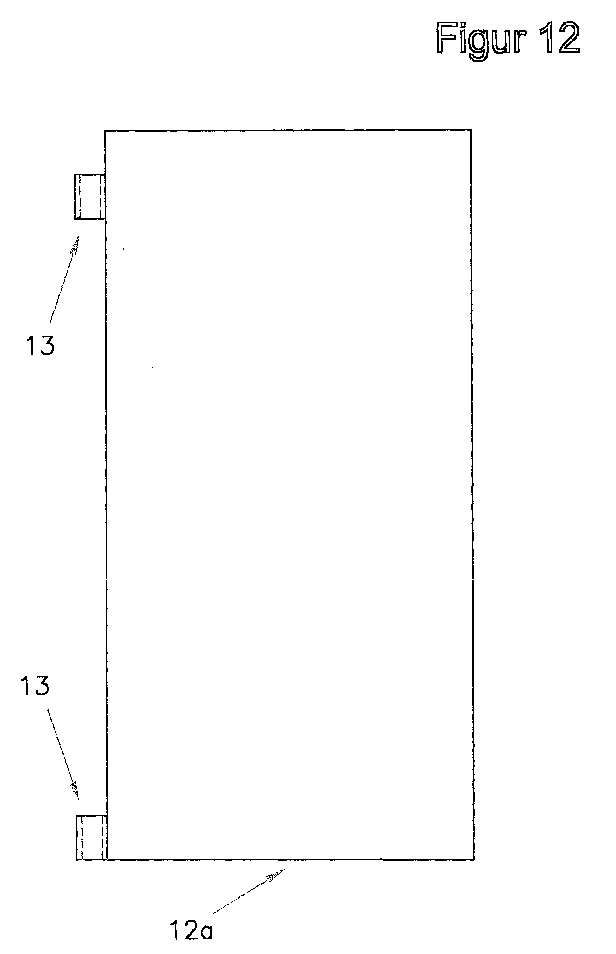

**Figur 12** ist eine Abbildung des linken Halbrohres **12a** mit den angeschweißten Röhrchen **13,** welcher auf den Bolzen **11** aufgesteckt wird.

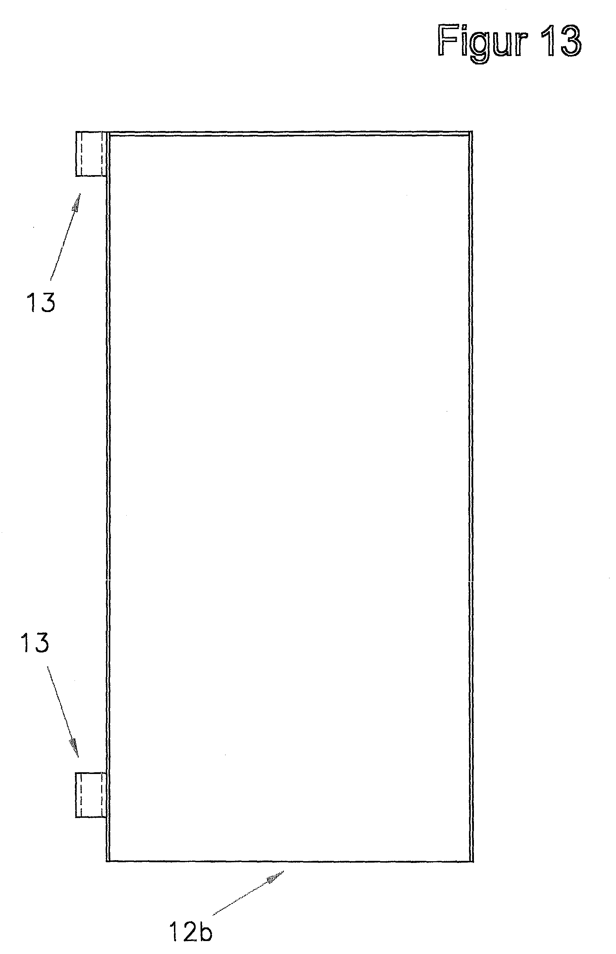

**Figur 13** ist eine Abbildung des rechten Halbrohres **12b** mit den angeschweißten Röhrchen **13**, welcher auf den Bolzen **11** aufgesteckt wird.

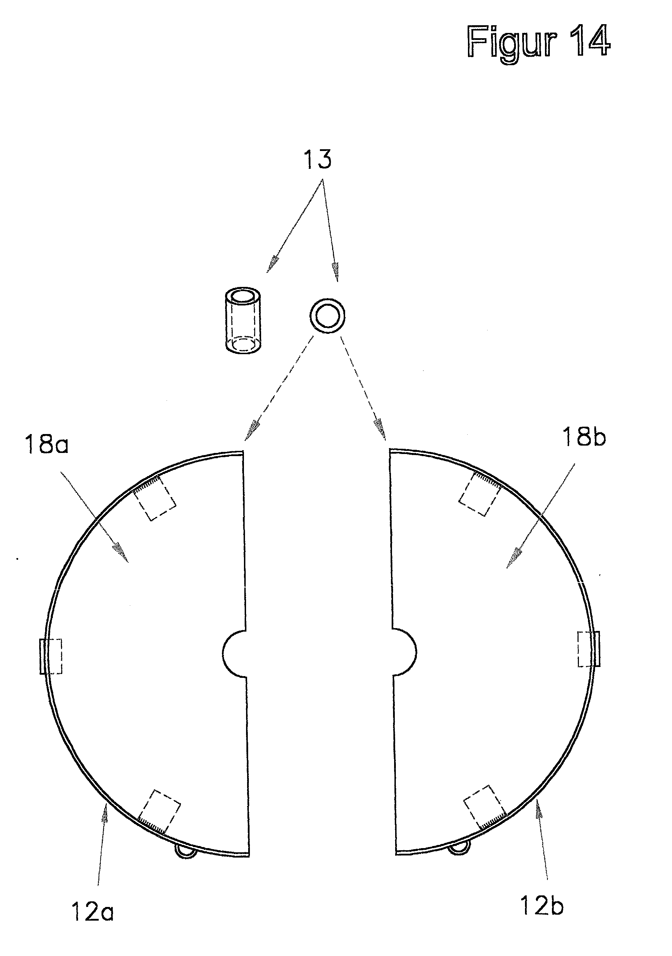

**Figur 14** ist eine Draufsicht der beiden Halbrohre **12a** und **12b** mit den angeschweißten Deckplatten **18a** und **18b,** sowie einer Draufsicht und Seitenansicht der angeschweißten Röhrchen **13.**

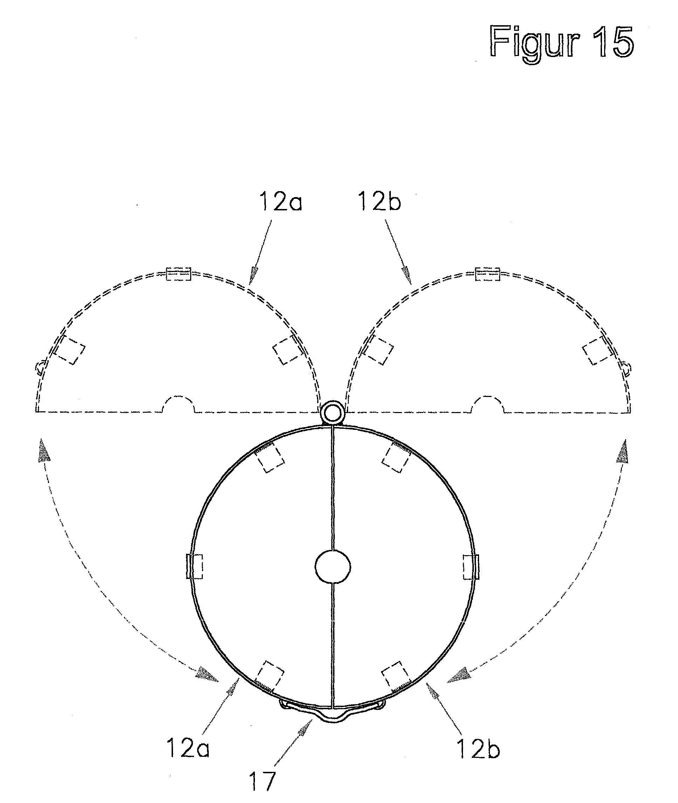

**Figur 15** ist eine schematische Draufsicht der Öffnungsbewegung der Halbrohre **12a** und **12b** und des Verschlusses **17.**

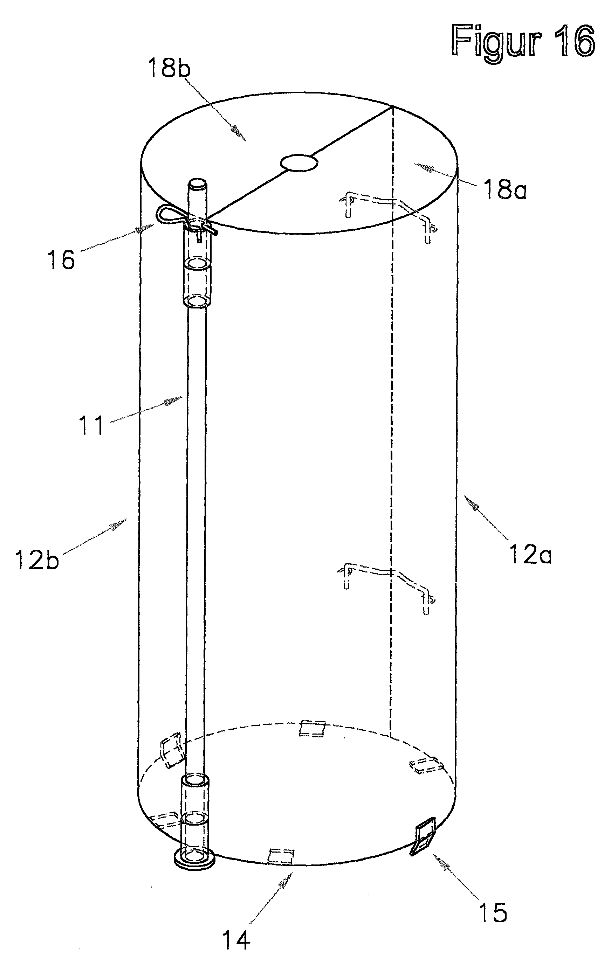

**Figur 16** ist eine perspektivische Seiten-/Rückansicht der Vorrichtung für Lagerung und Transport im verschlossenen Zustand. Es zeigt die Halbrohre **12a** und **12b,** die angeschweißten Deckplatten **18a** und **18b,** den Bolzen **11** mit dem durchgesteckten Bolzenstift **16,** die Halteplättchen **14** und die gebogenen Halteplättchen **15.**

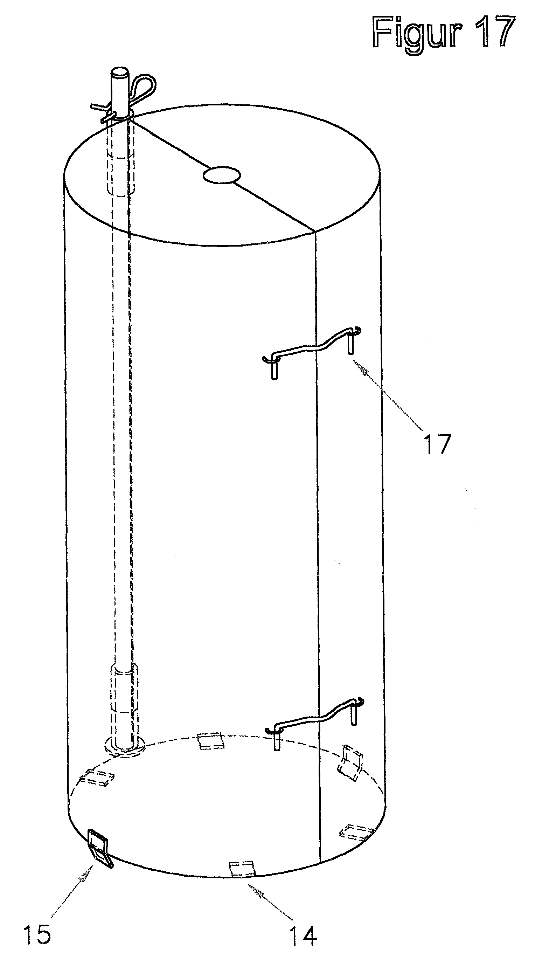

**Figur 17** ist eine perspektivische Vorder-/Seitenansicht der Vorrichtung für Lagerung und Transport im verschlossenen Zustand mit dem Verschluss **17** der angeschweißten Halteplättchen **14** und der angeschweißten gebogenen Halteplättchen **15.**

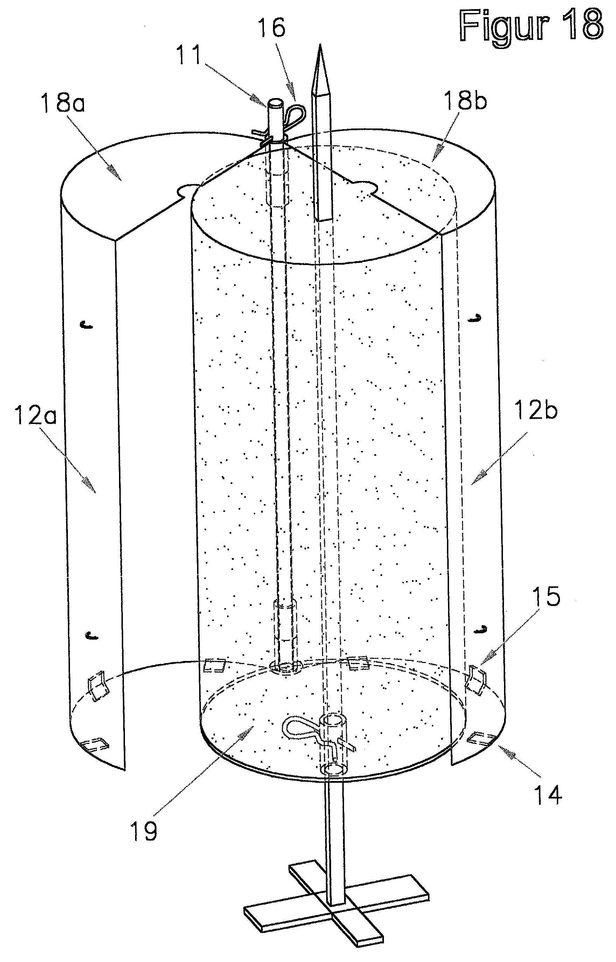

**Figur 18** ist eine perspektivische Vorder-/Seitenansicht der Vorrichtung für Lagerung und Transport im geöffneten Zustand mit den Halbrohren **12a** und **12b,** an denen die Halteplättchen **14,** die gebogenen Halteplättchen **15,** sowie die Deckplatten **18a** und **18b** angeschweißt sind. Außerdem ist neben dem Bolzen 11 und dem Bolzenstift **16** der angefertigte Gyros- /Dönerspieß **19** zu sehen.

### Bezugszeichenliste

- 1: Fundamentring
- 2: Angeschweißtes Rohr
- 3: Angeschweißte Stütze
- 4: Etagenringe
4a Rechter Halbring
4b Linker Halbring
- 5: Angeschweißter Rohrring
- 6: Bolzen
- 7: Verschluss
- 8: Plättchen
- 9: Reduzierstück
- 10: Gyros-/Dönerspieß
- 11: Bolzen
- 12 a: Linker Halbrohr
- 12 b: Rechter Halbrohr
- 13: Angeschweißte Röhrchen
- 14: Angeschweißte Halteplättchen
- 15: Angeschweißte gebogene Halteplättchen
- 16: Bolzenstift
- 17: Verschluss
- 18 a: Linke angeschweißte Deckplatte
- 18 b: Rechte angeschweißte Deckplatte
- 19: Angefertigter Gyros-/Dönerspieß

## Patentansprüche

1. Gyros- und Döneraufbauvorrichtung bestehend aus einem Fundamentring **1** als Basis, an dessen Außenseite senkrecht ein Rohr **2** mit zwei Stützen 3 angeschweißt sind, wobei in das Rohr **2** ein Bolzen einschiebbar ist, an den weitere Etagenringe **4** aufbaubar sind, die aus zwei Halbringen **4a** und **4b** mit dem Durchmesser des Fundamentrings **1** bestehen und jeweils an einem Ende der Halbringe in entsprechend versetzter halber Höhe der Halbringe Rohrstücke **5** angeschweißt sind, die auf den Bolzen gesteckt, die zwei Halbringe zu einer Einheit verbinden und eine Erweiterung der Etagen nach oben ermöglicht.

2. Die Gyros- und Döneraufbauvorrichtung gemäß Anspruch 1 ist **dadurch gekennzeichnet, dass** sich die Etagenringe 4 in einer beliebigen Anzahl erweitern lassen.

3. Die Gyros- und Döneraufbauvorrichtung gemäß einem der Ansprüche 1 oder 2 ist **dadurch gekennzeichnet, dass** die Halbringe **4a** und **4b** zusätzlich durch Verschluss zu einem Etagenring zusammengefügt werden.

4. Die Gyros- und Döneraufbauvorrichtung gemäß einem der Ansprüche 1 bis 3 ist **dadurch gekennzeichnet, dass** an den seitlichen unteren Rändern in der Mitte der Halbringe **4a** und **4b** jeweils Plättchen angeschweißt sind, welche der Stabilisierung der Etagenringe **4** dienen bzw. ein seitliches Verrutschen der Etagenringe **4** vermeiden.

5. Die Gyros- und Döneraufbauvorrichtung gemäß einem der Ansprüche 1 bis 4 ist **dadurch gekennzeichnet, dass** in die einzelnen Etagenringe 4 zusätzlich halbkreisförmige Reduzierstücke 9 in beliebiger Größe einsetzbar sind, um die Breite des Gyros-/Dönerspießes variieren zu können.

6. Das Verfahren zur Herstellung von Gyros-/Dönerspießen 10 ist durch folgende Schritte gekennzeichnet:
a) Aufbau des Gerätes um den leeren Fleischspieß mit seiner dazugehörigen Bodenplatte und seinem kreuzförmigen Standfuß.
b) Schließen des ersten Etagenringes **4.**
c) Auffüllen des ersten Etagenringes **4** mit Hackfleisch und / oder dünnen Schichten Scheibenfleisch.
d) Schließen des zweiten Etagenringes **4** mit Wiederholung des Auffüllvorganges.
e) Wiederholen der Schritte bis zur Fertigstellung des Gyros-/Dönerspießes **10**.

7. Das Verfahren nach Anspruch 6 ist **dadurch gekennzeichnet, dass** die Höhe des Gyros-/Dönerspießes **10** durch Schließen weiterer Etagenringe **4** gesteigert werden kann.

8. Das Verfahren nach Anspruch 6 und 7 ist **dadurch gekennzeichnet, dass** durch die Etagenringe **4** eine gleichmäßige bzw. standardisierte Form des Gyros-/Dönerspießes **10** erreicht wird.

9. Das Verfahren nach Anspruch 6 bis 8 ist **dadurch gekennzeichnet, dass** durch die Etagenringe **4** die Höhe des Gyros-/Dönerspießes **10** variierbar ist.

10. Das Verfahren nach Anspruch 6 bis 9 ist **dadurch gekennzeichnet, dass** durch Einsetzen verschiedener Reduzierstücke **9** die Breite des Gyros-/Dönerspießes **10** variierbar ist.

11. Das Verfahren nach Anspruch 6 bis 10 ist **dadurch gekennzeichnet, dass** durch das Auffüllen der einzelnen Etagenringe **4** nacheinander und mit anschließendem manuellen Andrücken der jeweiligen Fleischschicht eine hohe Festigkeit des Gyros-/Dönerspießes **10** erreicht wird.

12. Die Gyros- und Dönertransport- und Lagerungsvorrichtung besteht aus einem Bolzen **11** als Basis, an dem die zwei Halbrohre **12a** und **12b,** welche den gleichen Durchmesser aufweisen wie die Etagenringe der Gyros- und Döneraufbauvorrichtung, mittels den angeschweißten Röhrchen **13** aufgesteckt werden, so dass bei der Schließung der Halbrohre **12a** und **12b** der von der Gyros- und Döneraufbauvorrichtung angefertigte Fleischspieß umschlossen wird.

13. Die Gyros- und Dönertransport- und Lagerungsvorrichtung gemäß Anspruch **12** ist **dadurch gekennzeichnet, dass** am unteren Ende der Halbrohre **12a** und **12b** Halteplättchen **14** sowie gebogene Halteplättchen **15** angebracht sind, die die Festigkeit der Vorrichtung am Fleischspieß gewährleisten.

14. Die Gyros- und Dönertransport- und Lagerungsvorrichtung gemäß Anspruch **12** und **13** ist **dadurch gekennzeichnet, dass** am oberen Ende des Halbrohres **12a** die angeschweißte Deckplatte **18a** und oberen Ende des Halbrohres **12b** die
angeschweißte Deckplatte **18b** angebracht sind, die die Stabilität des Vorrichtung am Fleischspieß gewährleisten.

15. Die Gyros- und Dönertransport- und Lagerungsvorrichtung ist gemäß Anspruch **12, 13** und **14 dadurch gekennzeichnet, dass** der Bolzen am oberen Ende durch einen Bolzenstift **16,** und die beiden Halbrohre **12a** und **12b** durch die Verschlüsse **17** verriegelt werden können.

16. Das Verfahren zum Transport und zur Lagerung von Gyros-/Dönerspießen ist durch folgende Schritte gekennzeichnet:
a) Anbringung der Gyros- und Dönertransport- und Lagerungsvorrichtung an den von der Gyros- und Döneraufbauvorrichtung angefertigten Gyros-/Dönerspieß.
b) Verschließung der Gyros- und Dönertransport- und Lagerungsvorrichtung um den Gyros-/Dönerspieß, so dass die Halteplättchen **14** zwischen Bodenplatte und Fleisch gesteckt werden, die gebogenen Halteplättchen **15** sich an den Rand der Bodenplatte heften und die Deckplatten **18a** und **18b** den Spieß am oberen Rand verschließen.
c) Transport und/oder Lagerung des angefertigten Gyros-/Dönerspießes.
d) Öffnung der Vorrichtung und Entfernung des Gyros-/Dönerspießes für die Verwendung am Grill.
